(19) Europäisches Patentamt

European Patent Office

Office européen des brevets

(11) **EP 1 389 706 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(51) Int Cl.:
***F16M 11/04*** *(2006.01)*

(21) Anmeldenummer: **03014946.2**

(22) Anmeldetag: **01.07.2003**

(54) **Deckenstativ**

Ceiling mount

Support fixé au plafond

(84) Benannte Vertragsstaaten:
**AT BE BG CH CY CZ DE DK EE ES FI FR GB GR HU IE IT LI LU MC NL PT RO SE SI SK TR**

(30) Priorität: **16.08.2002 DE 10237482**

(43) Veröffentlichungstag der Anmeldung:
**18.02.2004 Patentblatt 2004/08**

(73) Patentinhaber: **MAQUET GmbH & Co. KG**
**76437 Rastatt (DE)**

(72) Erfinder: **Koch, Guido**
**76131 Karlsruhe (DE)**

(74) Vertreter: **Schaumburg, Thoenes, Thurn,**
**Landskron**
**Patentanwälte**
**Postfach 86 07 48**
**81634 München (DE)**

(56) Entgegenhaltungen:
**EP-A- 0 943 306          EP-A- 1 067 419**
**DE-A- 2 061 662          DE-A- 4 318 659**

EP 1 389 706 B1

**Beschreibung**

Die Erfindung betrifft ein Deckenstativ mit einem ersten um eine erste vertikale Achse schwenkbaren Schwenkarm, der an einem freien Ende zur Halterung einer Last ausgebildet ist.

Deckenstative dieser Art werden beispielsweise als Träger für OP-Leuchten, Monitore oder medizinisches Gerät verwendet. Typischerweise ist der erste Schwenkarm bei einem derartigen Deckenstativ an einem weiteren horizontal verstellbaren Teil angelenkt, beispielsweise an einem Ende eines zweiten Schwenkarmes. Durch die Überlagerung der Bewegung des horizontal verstellbaren Teiles und der Schwenkbewegung des ersten Schwenkarmes kann das medizinische Gerät innerhalb einer horizontalen Fläche bewegt und in eine geeignete Position gebracht werden. Eine Verstellbarkeit des Gerätes in vertikaler Richtung wird bei bekannten Deckenstativen durch eine Hubsäule (siehe z.B. EP 943 306 A) realisiert, mit deren Hilfe der erste Schwenkarm als Ganzes auf- und abgefahren werden kann. Derartige Deckenstative haben jedoch den Nachteil, dass die Hubsäule relativ viel Platz beansprucht und das medizinische Personal bei der Arbeit behindert.

Der Erfindung liegt die Aufgabe zugrunde, ein Deckenstativ der eingangs genannten Art anzugeben, bei dem eine Höhenverstellbarkeit der am ersten Schwenkarm gehalterten Last bei geringem Platzbedarf realisiert ist.

Diese Aufgabe wird bei einem Deckenstativ der eingangs genannten Art dadurch gelöst, dass ein lastferner Abschnitt des ersten Schwenkarmes einen Schenkel eines asymmetrischen Viergelenkes bildet, dessen dem ersten Schwenkarm gegenüberliegender Schenkel durch einen koaxial zur ersten vertikalen Achse angeordneten vertikalen Zapfen gebildet wird, an dem in einem axialen Abstand voneinander jeweils um die Zapfenachse einerseits und um zwei parallele horizontale Achsen andererseits schwenkbar ein oberer und ein unterer Gelenkschenkel gelagert sind, die an ihrem dem Zapfen fernen Ende um horizontale Achsen schwenkbar mit dem Schwenkarm verbunden sind, und dass zwei Schenkel des asymmetrischen Viergelenkes mittels einer Stellvorrichtung relativ zueinander verstellbar sind.

Bei diesem Aufbau wird also der erste Schwenkarm aufgrund der Asymmetrie des Viergelenkes durch Verstellen zweier Gelenkschenkel relativ zueinander in einer vertikalen Ebene um sein lastfernes Ende geschwenkt, wodurch das lastseitige Ende des ersten Schwenkarmes und somit die gehalterte Last in der Höhe verstellt wird. Insbesondere kann das freie Ende des ersten Schwenkarmes bei Nichtbenutzung des medizinischen Gerätes unter die Zimmerdecke geschwenkt werden, wo es dem medizinischen Personal nicht im Wege ist.

In einer bevorzugten Ausführungsform ist die Länge b des oberen Gelenkschenkels größer als die Länge c des unteren Gelenkschenkels und liegen der lastferne Abschnitt des ersten Schwenkarmes und sein lastseitiges Ende auf gegenüberliegenden Seiten der ersten vertikalen Achse.

Das asymmetrische Viergelenk ist vorteilhafterweise so ausgelegt, dass eine relativ geringe Verstellung des oberen und unteren Gelenkschenkels relativ zueinander zu einer verhältnismäßigen großen Schwenkbewegung des ersten Schwenkarmes führt. Dies kann dadurch erreicht werden, dass der obere und der untere Gelenkschenkel bezogen auf ihren gegenseitigen Abstand verhältnismäßig lang sind. Gute Resultate diesbezüglich lassen sich erzielen, wenn die Länge c des unteren Gelenkschenkels größer ist als die Länge a des vom Zapfen gebildeten Schenkels des Viergelenkes.

Vorzugsweise ist außerdem die Länge a des vom Zapfen gebildeten Schenkels des Viergelenkes größer als die Länge d des vom ersten Schwenkarm gebildeten Schenkels des Viergelenkes. Dann befindet sich der Momentanpol des Viergelenkes, der im Schnittpunkt der gedachten Verlängerungen des oberen und unteren Gelenkschenkels liegt, näher am lastfernen als am lastseitigen Ende des ersten Schwenkarmes. Dies hat zur Folge, dass das lastseitige Ende des ersten Schwenkarmes beim Verstellen des asymmetrischen Viergelenkes eine größere Bewegung macht als das lastferne Ende.

Vorzugsweise ist die Summe der Länge a und der Länge b größer als die Summe der Länge d und der Länge c. Dann kann der Winkel zwischen dem unteren Gelenkschenkel und dem vom ersten Schwenkarm gebildeten Schenkel 180° erreichen und umklappen, d.h. das Viergelenk kann "durchschlagen", wodurch sich ein sehr großer vertikaler Schwenkbereich für den ersten Schwenkarm ergibt.

Streng genommen besteht die vertikale Bewegung des ersten Schwenkarmes aus einer Kombination von zwei Bewegungen, nämlich einer Schwenkbewegung des ersten Schwenkarmes um dessen Verbindungsgelenk mit dem oberen Gelenkschenkel, begleitet von einer Bewegung dieses Gelenkes auf einer kreisförmigen Bahn um das Verbindungsgelenk vom oberen Gelenkschenkel und dem vertikalen Zapfen. Bei einer geeigneten Wahl der Geometrie des Viergelenkes kann die Überlagerung der beiden Bewegungen bewirken, dass das lastseitige Ende des ersten Schwenkarmes bei einer vertikalen Schwenkbewegung eine annähernd geradlinig vertikale Bahn beschreibt. Dies wird an Hand eines Ausführungsbeispieles weiter unten näher erläutert. Ein günstiges Verhalten diesbezüglich ergibt sich, wenn die horizontale Lage des ersten Schwenkarmes zumindest annähernd mit dem Durchschlagspunkt des Viergelenkes zusammenfällt. Ein besonders günstiges Verhältnis diesbezüglich ergibt sich ferner, wenn das Quadrat der Summe der Länge c und der Länge d zumindest annähernd gleich der Summe des Quadrates der Länge a und des Quadrates der Länge b ist.

Vorzugsweise wird die Stellvorrichtung durch einen Linearantrieb gebildet, der am Verbindungsgelenk vom ersten Schwenkarm und dem unteren Gelenkschenkel einerseits und am oberen Gelenkschenkel andererseits angreift. In einer bevorzugten Ausführungsform ist am freien Ende des ersten Schwenkarmes ein Lastenträger angeordnet. Der Lastenträger hat zur Befestigung am freien Ende des ersten Schwenkarmes vorzugsweise einen Befestigungsabschnitt, an dessen Unterseite ein zur Halterung der Last bestimmter Rahmen um eine vertikale Lastenträgerachse drehbar gelagert ist.

Vorzugsweise sind beim erfindungsgemäßen Deckenstativ 10 zur Geradführung des Lastenträgers ein oberes Gelenkparallelogramm und ein mit dem oberen Gelenkparallelogramm gekoppeltes unteres Gelenkparallelogramm ausgebildet, wobei ein Schenkel des oberen Gelenkparallelogramms durch den oberen Gelenkschenkel des asymmetrischen Viergelenkes gebildet wird und ein weiterer Schenkel des oberen Gelenkparallelogramms einen festen Winkel mit der ersten vertikalen Achse bildet, wobei das untere Gelenkparallelogramm den ersten Schwenkarm als Schenkel. beinhaltet und wobei die beiden Gelenkparallelogramme dadurch miteinander gekoppelt sind, dass der dem genannten weiteren Schenkel gegenüberliegende Schenkel des oberen Gelenkparallelogramms in fester räumlicher Beziehung zu einem Schenkel des unteren Gelenkparallelogramms steht. Vorzugsweise wird dabei der genannte weitere Schenkel des oberen Gelenkparallelogramms durch den vertikalen Zapfen gebildet und werden die in einer festen räumlichen Beziehung zueinander stehenden Schenkel des oberen und unteren Gelenkparallelogramms durch einen gemeinsamen Lenker gebildet.

In einer bevorzugten Weiterbildung beinhaltet das Deckenstativ einen zweiten Schwenkarm, der an einem ersten Ende um eine zweite vertikale Achse schwenkbar gelagert ist und an dessen zweiten Ende der vertikale Zapfen angeordnet ist. Durch Verwendung eines zweiten Schwenkarmes wird der horizontale Bewegungsspielraum des Lastenträgers erweitert. In einer bevorzugten Weiterbildung ist das erste Ende des zweiten Schwenkarmes bzw. in einer Ausführungsform ohne zweiten Schwenkarm der vertikale Zapfen in einer Haltevorrichtung gelagert, die ihrerseits in einer Führung, die zur Befestigung an einer Zimmerdecke bestimmt ist, horizontal verstellbar gelagert ist. Dadurch ergibt sich ein weiterer Freiheitsgrad für eine horizontale Bewegung des Lastenträgers.

Falls das Deckenstativ als Träger für ein Gerät verwendet werden soll, das mit elektrischen und/oder Fluidleitungen zu verbinden ist, werden diese Leitungen vorzugsweise in außen am Stativ entlanggeführten Gliederketten untergebracht. Diese Leitungsführung hat eine Reihe von Vorteilen. Die Gliederketten können in Schleifen um die Schwenkachsen gelegt werden und sich beim Verschwenken der entsprechenden Teile auf- und abwickeln. Sie bieten relativ viel Platz, der auch für eine Vielzahl von Leitungen ausreicht, und Leitungen mit großen Anschlusssteckern können bereits vorkonfektioniert in das System eingezogen bzw. eingelegt werden.

Bei herkömmlichen Deckenstativen werden die Leitungen hingegen im Inneren der Schwenkarme und axial durch die Schwenklager geführt. Dazu müssen die Schwenkarme einen geschlossenen Querschnitt aufweisen, was deren Gestaltungsspielraum einschränkt. Außerdem können aus Platzgründen nur wenige Leitungen axial durch die Lager geführt werden, und das Hinzufügen oder Entfernen einer Leitung gestaltet sich äußerst aufwendig.

In einer bevorzugten Ausführungsform hat das Deckenstativ eine erste Gliederkette mit einem festen Abschnitt, der am zweiten Schwenkarm entlanggeführt und an diesem befestigt ist und an dessen dem ersten Ende des zweiten Schwenkarmes zugewandten Ende ein Anschlussabschnitt anschließt. Der Anschlussabschnitt der ersten Gliederkette ist in einer horizontalen Schleife um die zweite vertikale Achse zu legen und mit seinem freien Ende beispielsweise an der Zimmerdecke zu befestigen. Die aus dem Anschlussabschnitt der ersten Gliederkette gebildete horizontale Schleife kann sich beim Schwenken des zweiten Schwenkarmes um die zweite vertikale Achse auf- und abwickeln, so dass die erste Gliederkette und die darin befindlichen Leitungen die Schwenkbewegung nicht behindern.

In einer weiteren bevorzugten Ausführungsform hat das Deckenstativ eine mit einem Ende am zweiten Schwenkarm befestigte zweite Gliederkette, die in einer horizontalen Schleife um die erste vertikale Achse gelegt ist und deren anderes Ende an einer um die erste vertikale Achse drehbaren, mit dem asymmetrischen Viergelenk rotationsfest verbundene Scheibe befestigt ist. Durch diese Führung wird verhindert, dass die zweite Gliederkette und die darin untergebrachten Leitungen eine Schwenkbewegung des ersten Schwenkarmes um die erste vertikale Achse behindern.

In einer vorteilhaften Weiterbildung hat das Deckenstativ eine dritte Gliederkette, deren eines Ende an der Scheibe und deren anderes Ende am ersten Schwenkarm befestigt ist. Dadurch wird erreicht, dass die dritte Gliederkette und die darin geführten Leitungen eine Schwenkbewegung des ersten Schwenkarmes in einer vertikalen Ebene nicht behindern.

In einer besonders bevorzugten Ausführungsform hat das Deckenstativ eine vierte Gliederkette, deren eines Ende am ersten Schwenkarm und deren anderes Ende am Befestigungsabschnitt des Lastenträgers befestigt ist. Dadurch wird erreicht, dass die vierte Gliederkette und die darin geführten Leitungen eine Verschwenkung des Befestigungsabschnittes gegenüber dem ersten Schwenkarm in einer vertikalen. Ebene nicht behindern.

In einer weiteren bevorzugten Ausführungsform werden die Leitungen durch den Befestigungsabschnitt des Lastenträgers entlang der Lastenträgerachse in dem Lagerungspunkt entgegengesetzter Richtung geführt und anschließend durch einen am Lastenträgerrahmen befestigten Leitungskanal radial nach außen und zum Rahmen geführt. Dadurch wird verhindert, dass die Leitungen eine Verdrehung des Lastenträgerrahmens gegenüber dem Befestigungsabschnitt behindern, ohne dass dazu die Leitungen durch das sie verbindende Lager geführt werden müssten.

Weitere Vorteile und Merkmale der erfindungsgemäßen Lösung ergeben sich aus der folgenden Beschreibung, welche in Verbindung mit den beigefügten Zeichnungen die Erfindung an Hand eines Ausführungsbeispieles erläutert. Darin zeigt:

Fig. 1 eine perspektivische Ansicht eines erfindungsgemäßen Deckenstativs, das an der Decke eines schematisch dargestellten Zimmers einer Intensivstation befestigt ist,

Fig. 2 eine perspektivische Ansicht des Deckenstativs, bei dem der Lastenträger heruntergefahren ist,

Fig. 3 eine Seitenansicht des Deckenstativs von Fig. 2,

Fig. 4 eine perspektivische Ansicht des Deckenstativs, bei dem der Lastenträger heraufgefahren ist,

Fig. 5 eine Seitenansicht des Deckenstativs von Fig. 4,

Fig. 6 einen vergrößerten Ausschnitt von Fig. 3,

Fig. 7 einen vergrößerten Ausschnitt von Fig. 5,

Fig. 8 einen Querschnitt durch den Lastenträger, und

Fig.9 eine perspektivische Ansicht eines verbesserten Deckenstativs, das in einer an einer an einer Zimmerdecke zu befestigenden Führung horizontal verstellbar gelagert ist.

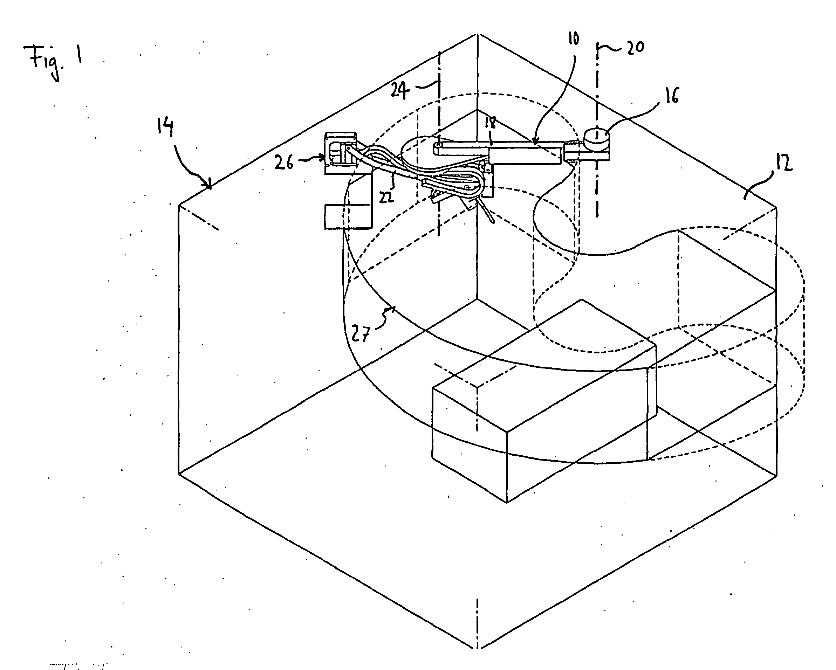

In Fig. 1 ist ein erfindungsgemäßes Deckenstativ 10 gezeigt, das mit einer Haltevorrichtung 16 an der Decke 12 eines schematisch dargestellten Zimmers 14 einer Intensivstation befestigt ist. Das Deckenstativ 10 hat einen zweiten Schwenkarm 18, der an einem ersten Ende um eine zweite vertikale Achse 20 schwenkbar in der Haltevorrichtung 16 gelagert ist. Am zweiten Ende des zweiten Schwenkarmes 18 ist ein erster Schwenkarm 22 um eine erste vertikale Achse 24 schwenkbar gelagert. Der erste Schwenkarm 22 ist zusätzlich in einer vertikalen Ebene schwenkbar, wodurch ein an seinem freien Ende angeordneter Lastenträger 26 herauf- und heruntergefahren werden kann. Durch horizontales Schwenken des ersten und zweiten Schwenkarmes 22, 18 um die erste bzw. zweite vertikale Achse 24, 20 und durch vertikales Schwenken des ersten Schwenkarmes 22 um sein lastfernes Ende kann der Lastenträger innerhalb eines in Fig. 1 gezeigten Raumbereiches 27 verstellt werden.

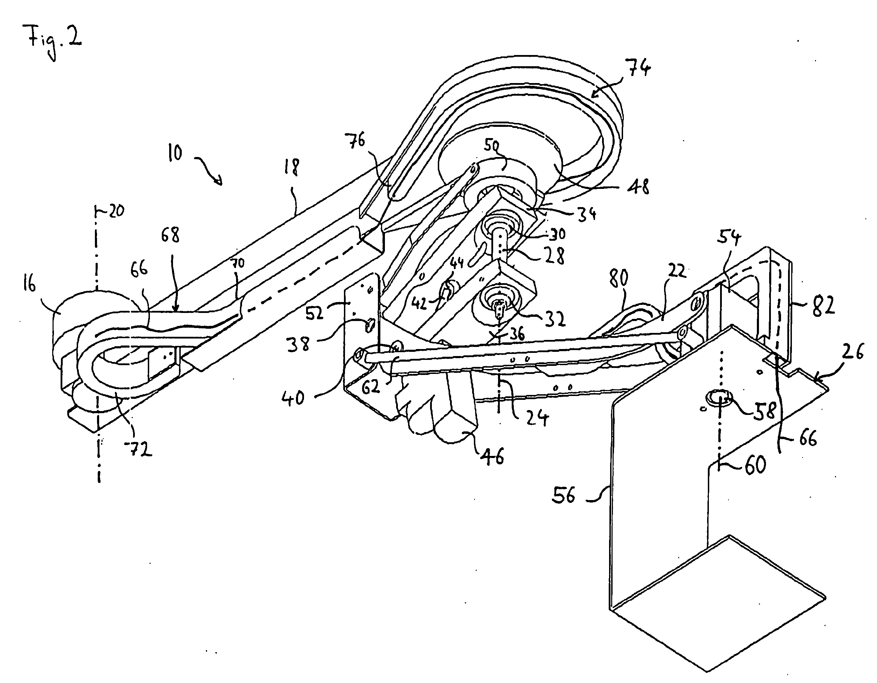

Zur näheren Beschreibung des Deckenstativs 10 werden die Fig. 2 bis 5 herangezo-. gen. Am zweiten Ende des zweiten Schwenkarmes ist ein vertikaler Zapfen 28 befestigt, an dem mit Hilfe von Kugelgelenken 30, 32 ein oberer Gelenkschenkel 34 und ein unterer Gelenkschenkel 36, der kürzer als der obere Gelenkschenkel 34 ist; in einem vertikalen Abstand voneinander angelenkt sind. Der obere Gelenkschenkel 34 ist an seinem dem Zapfen 28 fernen Ende durch ein Gelenk 38 mit dem lastfernen Ende des ersten Schwenkarmes 22 verbunden. Das dem Zapfen 28 ferne Ende des unteren Gelenkschenkels 36 ist über ein Gelenk 40, das zwischen dem Gelenk 38 und dem lastseitigen Ende des ersten Schwenkarmes 22 angeordnet ist, mit diesem verbunden. Der Zapfen 28, der obere Gelenkschenkel 34, der untere Gelenkschenkel 36 und ein lastferner Abschnitt des ersten Schwenkarmes 22 bilden somit ein asymmetrisches Viergelenk.

Der obere Gelenkschenkel 34 und der untere Gelenkschenkel 36 sind über einen Linearantrieb relativ zueinander verstellbar. Der Linearantrieb wird durch eine von einem Motor 46 angetriebene Spindel 42 gebildet, die mit einem im oberen Gelenkschenkel 34 ausgebildeten Gewinde 44 in Eingriff steht und durch das dem Zapfen 28 ferne Ende des unteren Gelenkschenkels 36 geführt ist.

Am Zapfen 28 ist oberhalb des oberen Gelenkschenkels 34 eine Scheibe 48 mit einem Bund 50 um die erste vertikale Achse 24 drehbar gelagert. Am Gelenk 38 ist ferner ein C-Profilteil 52 angelenkt. Ein Lenker 53 ist mit einem Ende an einem oberen Abschnitt des C-Profilteils 52 und mit seinem anderen Ende am Bund 50 schwenkbar angelenkt. Der Lenker 53, ein Abschnitt des vertikalen Zapfens 28, der obere Gelenkschenkel 34 und das C-Profilteil 52 bilden gemeinsam ein oberes Gelenkparallelogramm. Über den Lenker 53 sind ferner der Bund 50 und die Scheibe 48 mit dem asymmetrischen Viergelenk starr bezüglich Rotationen um den vertikalen Zapfen 28 verbunden.

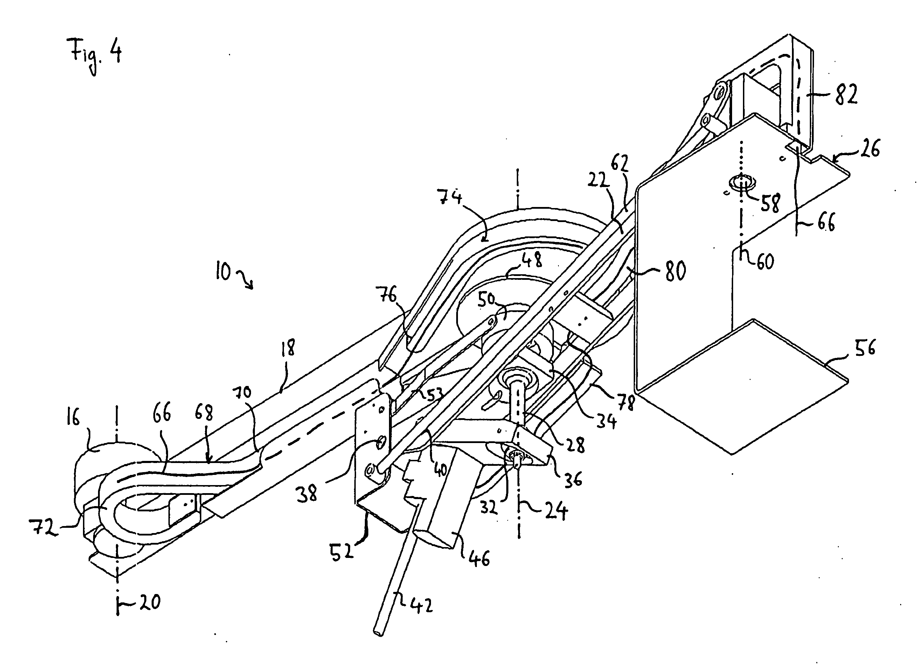

Der Lastenträger 26 hat einen Befestigungsabschnitt 54, an dessen Unterseite ein zur Halterung eines Gerätes bestimmter Rahmen 56 mit Hilfe eines Lagers 58 (Fig. 2 und Fig. 4) um eine vertikale Lastenträgerachse 60 schwenkbar gelagert ist. Der erste Schwenkarm 22 ist an seinem freien Ende am Befestigungsabschnitt 54 des Lastenträgers 26 angelenkt. Ein Lenker 62 ist mit einem Ende ebenfalls am Befestigungsabschnitt 54 angelenkt und mit seinem anderen Ende an einem unteren Abschnitt des C-Profilteils 52 angelenkt. Der erste Schwenkarm 22, der Befestigungsabschnitt 54, der Lenker 62 und ein Abschnitt des C-Profilteils 52 bilden ein unteres Gelenkparallelogramm. Das obere und das untere Gelenkparallelogramm sind über das C-Profilteil 52 miteinander gekoppelt. Die miteinander gekoppelten Gelenkparallelogramme dienen auf unten näher erläuterte Weise der Geradführung des Lastenträgers 26.

Durch die Kugelgelenke 30 und 32 ist die aus dem asymmetrischen Viergelenk, dem oberen Gelenkparallelogramm, dem unteren Gelenkparallelogramm und dem Lastenträger 26 gebildete Einheit um den vertikalen Zapfen 28 schwenkbar. Die oben erwähnte erste vertikale Schwenkachse 24 des ersten Schwenkarmes 22 wird also durch den vertikalen Zapfen 28 realisiert.

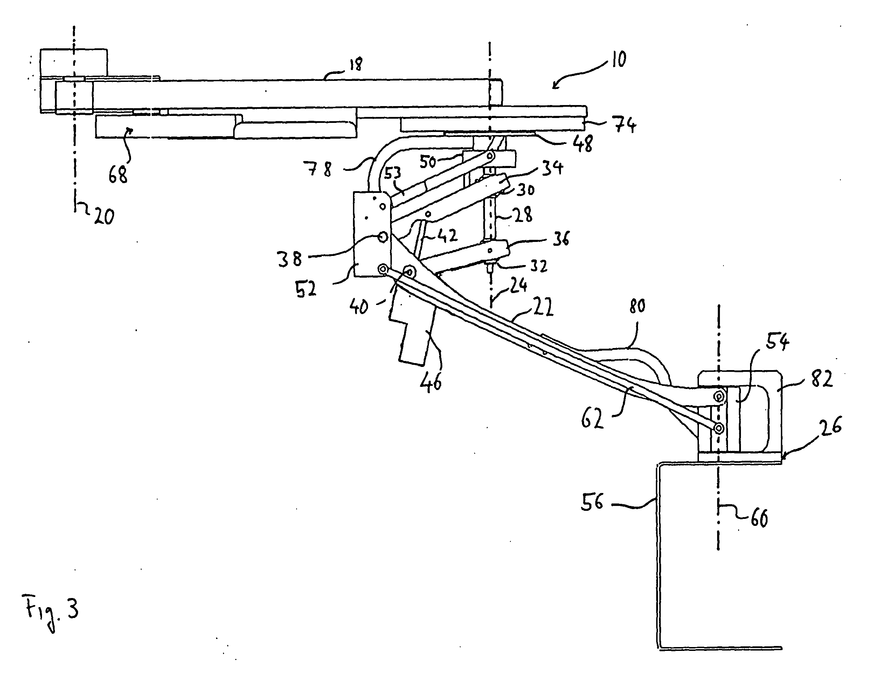

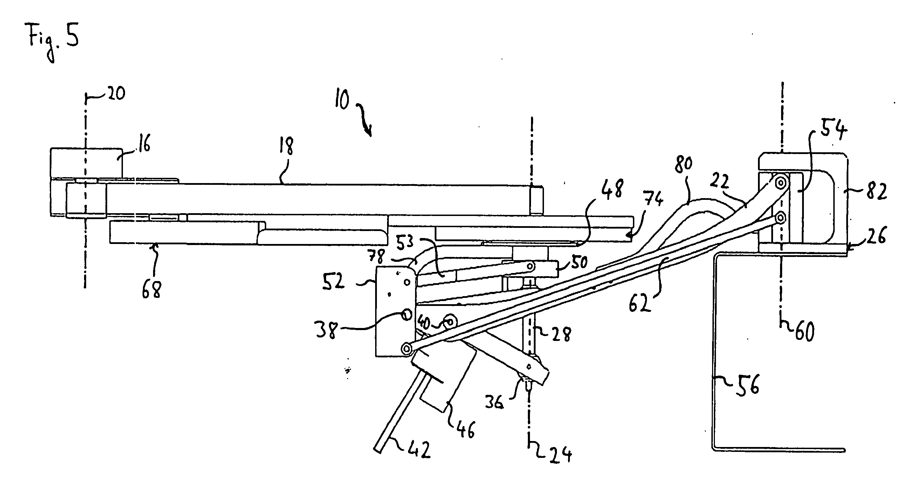

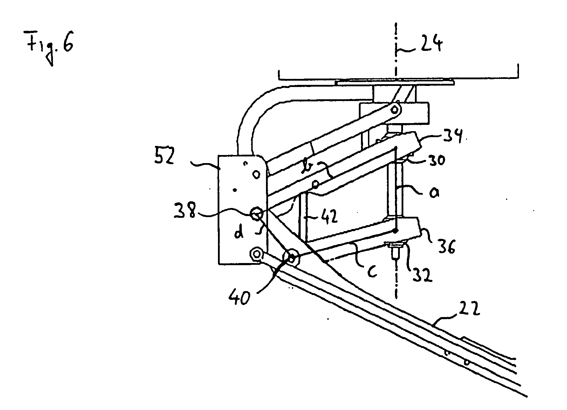

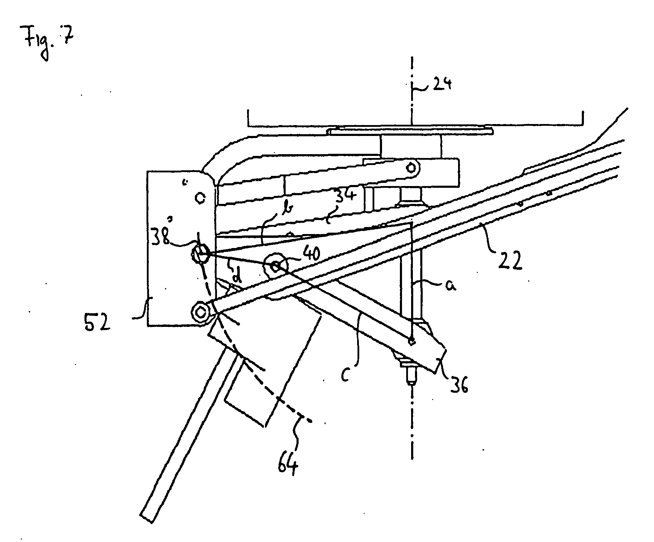

Im Folgenden wird unter Bezugnahme auf die Fig. 6 und 7 die Funktion des asymmetrischen Viergelenkes beschrieben. Fig. 6 zeigt das asymmetrische Viergelenk in einem vergrößerten Ausschnitt aus Fig. 3, Fig. 7 zeigt das asymmetrische Viergelenk in einem vergrößerten Ausschnitt aus Fig. 5. Das asymmetrische Viergelenk hat einen Schenkel a, der durch einen Abschnitt des vertikalen Zapfens 28 gebildet wird, einen Schenkel b, der durch den oberen Gelenkschenkel 34 gebildet wird, einen Schenkel c, der durch den unteren Gelenkschenkel 36 gebildet wird und einen Schenkel d, der durch einen lastfernen Abschnitt des ersten Schwenkarmes 22 gebildet wird.

Mit Hilfe der Spindel 42 können der obere Gelenkschenkel 34 und der untere Gelenkschenkel 36, d.h. die Schenkel b und c des asymmetrischen Viergelenkes relativ zueinander verstellt werden. Dadurch verändert sich auch der Winkel zwischen den Schenkeln d und a, also dem ersten Schwenkarm 22 und dem vertikalen Zapfen 28, d.h. der erste Schwenkarm 22 wird in einer vertikalen Ebene um sein lastfernes Ende, genauer gesagt um die Achse des Gelenkes 38 geschwenkt, wodurch der Lastenträger 26 herauf- bzw. heruntergefahren wird. Allerdings bewegt sich dabei die Achse des Gelenkes 38 auf einer in Fig. 7 skizzierten Kreisbahn 64 um das obere Kugelgelenk 30. Die Vertikalbewegung des ersten Schwenkarmes 22 besteht also aus einer Überlagerung einer Schwenkbewegung um sein lastseitiges Ende und einer Kreisbewegung des lastseitigen Endes um das obere Kugelgelenk 30.

Zur Veranschaulichung der Schwenkbewegung sind in Fig. 3 und Fig. 5 die extremalen Positionen des ersten Schwenkarmes 22 gezeigt, nämlich in Fig. 3 ein nach unten geschwenkter erster Schwenkarm 22 und in Fig. 5 ein nach oben geschwenkter erster Schwenkarm 22. Man beachte, dass sich der Lastenträger bei nach oben geschwenktem ersten Schwenkarm dicht unter der Zimmerdecke befindet. Wenn das Deckenstativ 10 nicht gebraucht wird, kann es in diese Position verstellt werden und ist dem behandelnden Personal nicht im Weg.

Wie in Fig. 6 und Fig. 7 zu sehen, ist beim gezeigten Ausführungsbeispiel der obere Gelenkschenkel b länger als der untere Gelenkschenkel c und liegt das lastseitige Ende des ersten Schwenkarmes 22 auf der dem asymmetrischen Viergelenk gegenüberliegenden Seite der ersten vertikalen Achse 24. Die Geometrie des gezeigten Viergelenkes ist so gewählt, dass eine relative Verstellung des oberen Gelenkschenkels b und des unteren Gelenkschenkels c optimal in eine vertikale Schwenkbewegung des ersten Schwenkarmes 22 übertragen wird. Insbesondere ist die Geometrie so gewählt, dass eine relativ geringe Verschwenkung der Schenkel b und c zu einer relativ großen Verschwenkung des Schenkels d führen. Dies wird dadurch erreicht, dass die Schenkel b und c vergleichsweise lang ausgebildet sind. Gute Ergebnisse werden erzielt, wenn die Länge c größer ist als die Länge a, wie dies beim Ausführungsbeispiel der Fall ist (hier und im Folgenden wird mit kleinen Buchstaben sowohl der Schenkel als auch dessen Länge bezeichnet.)

Außerdem ist bei dem gezeigten Viergelenk die Länge d größer als die Länge a, wodurch erreicht wird, dass der Momentanpol, gebildet durch den Schnittpunkt der Verlängerungen der Schenkel b und c, in der Darstellung von Fig. 6 und 7 stets links von der ersten vertikalen Achse 24 liegt, und sich damit näher am den Schenkel d bildenden, lastfernen Abschnitt des ersten Schwenkarmes 22 als an dessen lastseitigen Ende befindet. Deshalb macht der Lastenträger 26 beim Verstellen des ersten Schwenkarmes 22 eine größere Bewegung als der lastferne Abschnitt des ersten Schwenkarmes.

Eine große Schwenkbewegung des Schenkels d wird ferner dadurch ermöglicht, dass der in Fig. 6 gezeigte Winkel zwischen c und d bis zu 180° Vollstreckung vergrößert werden und umklappen kann, wie in Fig. 7 zu sehen. Dieses Umklappen des Winkels nennt man auch "Durchschlagen" des Viergelenkes. Im Durchschlagspunkt des Viergelenkes liegt der Momentanpol im Gelenk 38, d.h. die Momentanbewegung des ersten Schwenkarmes 22 im Durchschlagspunkt ist eine reine Schwenkbewegung um das (momentan ortsfeste) Gelenk 38. Eine notwendige Bedingung für die Möglichkeit des Durchschlagens ist, dass gilt: $a + b > c + d$.

Wird der erste Schwenkarm 22 aus einer horizontalen Lage nach unten geschwenkt, bewegt sich der Lastenträger 26 infolge der Schwenkbewegung auf einer Kreisbahn, d.h. in der Ansicht von Fig. 3 und 5 nach unten und nach links. Da aber gleichzeitig das Gelenk 38 auf der Kurve 64 (siehe Fig. 7) nach unten und nach rechts wandert, ergibt sich in der Überlagerung der beiden Bewegungen eine nahezu geradlinig vertikale Bewegung des Lastenträgers 26, was im Gebrauch des Deckenstativs 10 als angenehm empfunden wird.

Zur näheren Erläuterung der nahezu geradlinig vertikalen Führung sei festgestellt, das die horizontale Lage des ersten Schwenkarmes 22, d.h. die Lage, in der sich der Befestigungsabschnitt 54 des Lastenträgers 26 auf gleicher Höhe befindet wie das Gelenk 38, ungefähr mit dem Durchschlagspunkt des Viergelenkes zusammenfällt. Im Durchschlagspunkt des Viergelenkes ist die Momentanbewegung des ersten Schwenkarmes 22 wie oben erwähnt eine reine Schwenkbewegung um das Gelenk 38, die jedoch zu einer vertikalen Momentanbewegung des Lastenträgers 26 führt, weil die Tangente an dessen Bahn vertikal ist, wenn sich der Schwenkarm 22 in horizontaler Lage befindet.

Wird der erste Schwenkarm 22 aus der horizontalen Lage nach unten geschwenkt, setzt die Bewegung des Gelenkes 38 auf der Kreisbahn 64 in Fig.7 nach rechts unten ein, die die ebenfalls einsetzende Linksbewegung des Lastenträgers 26 infolge der Schwenkbewegung des ersten Schwenkarmes 22 nahezu kompensiert. Damit genügend Raum für die Bewegung des Gelenkes 38 nach rechts vorhanden ist, sollte sich das Gelenk bei horizontaler Lage des zweiten Schwenkarmes 22 möglichst weit links auf der Kurve 64 befinden. Auf die Geometrie des Viergelenkes übertragen bedeutet dies, dass der obere Gelenkschenkel 34 nahezu horizontal liegen sollte, wenn sich das Viergelenk im Durchschlagspunkt befindet, d.h. nach dem Satz des Pythagoras sollte zumindest annähernd gelten: $(c+d)^2 = a^2 + b^2$. Diese Beziehung ist im gezeigten Ausführungsbeispiel näherungsweise erfüllt.

Zur Erläuterung der Funktion der gekoppelten Gelenkparallelogramme wird auf Fig. 3 und 5 verwiesen. Beim Verschwenken des ersten Schwenkarmes 22 bleibt das C-Profilteil 52 stets vertikal ausgerichtet, weil sich ein oberer Abschnitt desselben und ein Abschnitt des vertikalen Zapfens 28 im oberen Gelenkparallelogramm als Schenkel gegenüberstehen. Da sich die Orientierung des C-Profilteils 52 nicht ändert, ändert sich auch die Orientierung des Befestigungsabschnittes 54 des Lastenträgers 26 nicht, weil diese beiden gegenüberliegende Schenkel des unteren Gelenkparallelogramms bilden. Somit bleibt der Lastenträgers 26 beim Verschwenken des ersten Schwenkarmes 22 stets aufrecht, wie in Fig. 2 bis 5 zu sehen.

Das erfindungsgemäße Deckenstativ 10 ist zur Halterung von medizinischen Geräten bestimmt. Derartige Geräte müssen in der Regel an elektrische und möglicherweise an Fluidleitungen angeschlossen werden, die von der Zimmerdecke 12 (Fig. 1) bzw. der Haltevorrichtung 16 derart zum Lastenträger 26 geführt werden müssen, dass sie die verschiedenen beschriebenen Schwenkbewegungen des Deckenstativs 10 nicht behindern. Eine bevorzugte Leitungsführung wird an Hand von Fig. 2 und 4 beschrieben, in denen eine Leitung 66 eingezeichnet ist.

Am zweiten Schwenkarm 18 ist eine erste Gliederkette 68 mit einem festen Abschnitt 70 befestigt und an diesem entlanggeführt. An dem dem ersten Ende des zweiten Schwenkarmes 18 näheren Ende des festen Abschnittes schließt ein Anschlussabschnitt 72 an. Bei der Installation des Deckenstativs wird das freie Ende des Anschlussabschnittes 72 in einer horizontalen Schleife um die zweite vertikale Achse 20 geführt und an der Zimmerdecke befestigt (die Befestigung des freien Endes an der Decke ist in den Figuren nicht gezeigt). Bei einer Verschwenkung des zweiten Schwenkarmes 18 um die zweite vertikale Achse 20 kann sich die horizontale Schleife auf- und abwickeln, ohne dass die Schwenkbewegung des zweiten Schwenkarmes 18 durch die erste Gliederkette 68 eingeschränkt würde.

Die Gliederkette 68 ist so angeordnet, dass ihre Gliederachsen vertikal stehen, so dass sie in einer horizontalen Ebene gekrümmt werden kann, nicht jedoch in einer vertikalen Ebene. Bei der Installation des Deckenstatives könnte die aus der ersten Gliederkette 68 gebildete horizontale Schleife von unten gestützt werden. Für die Gliederketten ist aus Gründen der Hygiene eine nicht gezeigte Abdeckung vorgesehen. Die Leitung 66 wird im Inneren der ersten Gliederkette 68 von der Zimmerdecke zum zweiten Schwenkarm 18 (dies ist in Fig. 2 und 4 nicht gezeigt) und am zweiten Schwenkarm 18 entlanggeführt.

Die Leitung 66 wird weiter in eine zweite Gliederkette 74 geführt, die an einem Ende 76 am zweiten Schwenkarm 18 befestigt ist, in einer horizontalen Schleife um die erste vertikale Achse 24 gelegt ist und deren anderes Ende, das in Fig. 2 und 4 verdeckt ist, an der Oberseite der Scheibe 48 befestigt ist. Bei Verschwenkung des ersten Schwenkarmes 22 um die erste vertikale Achse 24 wickelt sich die aus der zweiten Gliederkette gebildete horizontale Schleife auf und ab, ohne die Schwenkbewegung des ersten Schwenkarmes 22 zu behindern.

Die Leitung 66 wird am Befestigungspunkt der zweiten Gliederkette 74 an der Scheibe 48 durch eine Öffnung in dieser und in eine dritte Gliederkette 78 (siehe Fig. 3 und 4) geführt, deren eines Ende an der Unterseite der Scheibe 48 und deren anderes Ende am ersten Schwenkarm 22 befestigt ist. Die dritte Gliederkette 78 ist so angeordnet, dass sie in einer vertikalen Ebene gekrümmt werden kann und daher vertikalen Schwenkbewegungen des zweiten Schwenkarmes 22 folgen kann.

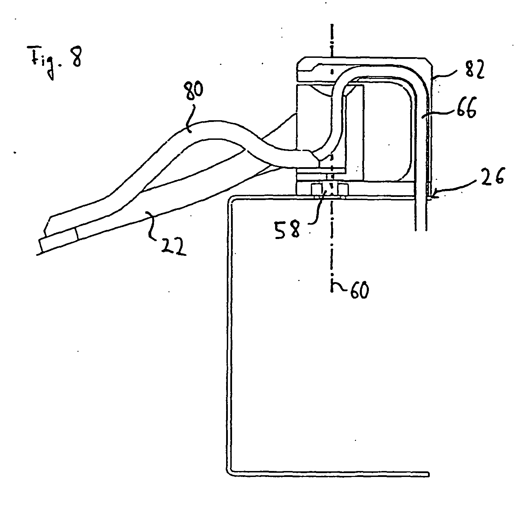

Etwa in der Mitte des zweiten Schwenkarmes 22 verlässt die Leitung 66 die dritte Gliederkette 78 und wird in eine vierte Gliederkette 80 geführt, deren eines Ende am ersten Schwenkarm 22 und deren anderes Ende am Befestigungsabschnitt 54 des Lastenträgers 26 befestigt ist (siehe Fig. 2 und 4). Die Leitung 66 wird dann von der vierten Gliederkette in den Befestigungsabschnitt 54, durch diesen entlang der Lastenträgerachse 60 in dem Lager 58 entgegengesetzter Richtung, also nach oben geführt und tritt dort in einen Leitungskanal 82 ein, der am Rahmen 56 befestigt ist und in dem die Leitung 66 erst radial nach außen und dann nach unten zum Rahmen 56 geführt wird. (siehe Fig. 2, Fig. 4 und Fig. 8). Dadurch wird ein Verdrehen des Rahmens 56 gegenüber dem Befestigungsabschnitt 54 gestattet, ohne dass hierzu die Leitung 66 durch das Lager 58 geführt werden müsste (siehe Fig. 8).

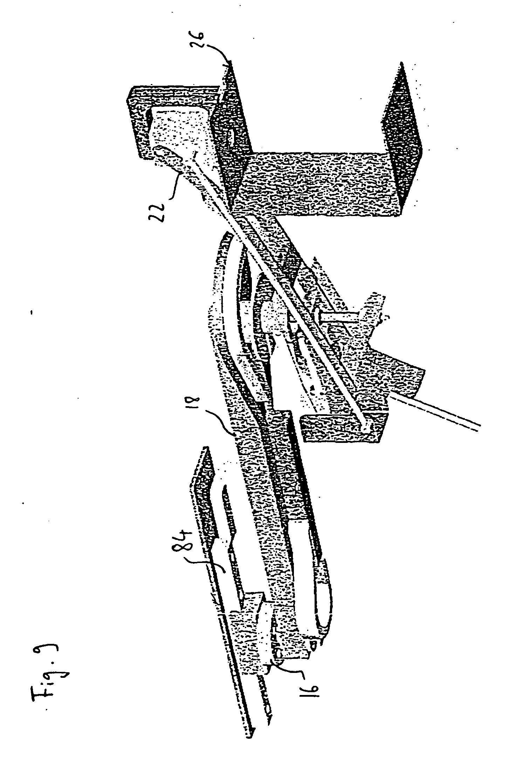

In einer verbesserten Ausführungsform des Deckenstativs 10 wird die Haltevorrichtung 16 nicht wie in Fig. 1 unmittelbar an der Zimmerdecke befestigt, sondern ist in einer Führung 84, die zur Befestigung an einer Zimmerdecke bestimmt ist, horizontal verstellbar gelagert (siehe Fig. 9), wodurch das Deckenstativ einen weiteren Freiheitsgrad erhält.

Bezugszeichenliste

| | |
|---|---|
| 10 | Deckenstativ |
| 12 | Zimmerdecke |
| 14 | Intensivstationszimmer |
| 16 | Haltevorrichtung |
| 18 | zweiter Schwenkarm |
| 20 | zweite vertikale Achse |
| 22 | erster Schwenkarm |
| 24 | erste vertikale Achse |
| 26 | Lastenträger |
| 27 | dem Lastenträger 26 zugänglicher Raumbereich |
| 28 | vertikaler Zapfen |
| 30 | oberes Kugelgelenk |
| 32 | unteres Kugelgelenk |
| 34 | oberer Gelenkschenkel |
| 36 | unterer Gelenkschenkel |
| 38 | Gelenk |
| 40 | Gelenk |
| 42 | Spindel |
| 44 | Gewinde |
| 46 | Motor |
| 48 | Scheibe |
| 50 | Bund |
| 52 | C-Profilteil |
| 53 | Lenker |
| 54 | Befestigungsabschnitt |
| 56 | Rahmen |
| 58 | Lager |
| 60 | Lastenträgerachse |
| 62 | Lenker |
| 64 | Bahnkurve des Gelenkes 38 beim Verschwenken des ersten Schwenkarmes 22 |
| 66 | Leitung |
| 68 | erste Gliederkette |
| 70 | fester Abschnitt der ersten Gliederkette |
| 72 | Anschlussabschnitt der ersten Gliederkette |
| 74 | zweite Gliederkette |
| 76 | Ende der zweiten Gliederkette |
| 78 | dritte Gliederkette |
| 80 | vierte Gliederkette |
| 82 | Leitungskanal |
| 84 | Führung |

**Patentansprüche**

1. Deckenstativ (10) mit einem ersten, um eine erste vertikale Achse (24) schwenkbaren Schwenkarm (22), der an einem freien Ende zur Halterung einer Last ausgebildet ist, **dadurch gekennzeichnet, dass** ein lastferner Abschnitt des ersten Schwenkarmes (22) einen Schenkel eines asymmetrischen Viergelenkes bildet, dessen dem ersten Schwenkarm (22) gegenüberliegender Schenkel durch einen koaxial zur ersten vertikalen Achse angeordneten vertikalen Zapfen (28) gebildet wird, an dem in einem axialen Abstand voneinander jeweils um die Zapfenachse einerseits und um zwei parallele horizontale Achsen andererseits schwenkbar ein oberer und ein unterer Gelenkschenkel (34, 36) gelagert sind, die an ihrem dem Zapfen fernen Ende um horizontale Achsen schwenkbar mit dem ersten Schwenkarm (22) verbunden sind,
und dass zwei Schenkel (34, 36) des asymmetrischen Viergelenkes mittels einer Stellvorrichtung relativ zueinander verstellbar sind.

2. Deckenstativ (10) nach Anspruch 1, **dadurch gekennzeichnet, dass** die Länge b des oberen Gelenkschenkels (34) größer ist als die Länge c des unteren Gelenkschenkels (36) und dass der lastferne Abschnitt des ersten Schwenkarmes (22) und sein lastseitiges Ende auf gegenüberliegenden Seiten der ersten vertikalen Achse (24) liegen.

3. Deckenstativ (10) nach Anspruch 2, **dadurch gekennzeichnet, dass** die Länge c größer ist als die Länge a des vom Zapfen (28) gebildeten Schenkels des Viergelenkes.

4. Deckenstativ (10) nach Anspruch 2 oder 3, **dadurch gekennzeichnet, dass** die Länge a des vom Zapfen (28) gebildeten Schenkels des Viergelenkes größer ist als die Länge d des vom ersten Schwenkarm (22) gebildeten Schenkels des Viergelenkes.

5. Deckenstativ (10) nach einem der Ansprüche 2 bis 4, **dadurch gekennzeichnet, dass** die Summe der Länge a des vom Zapfen (28) gebildeten Schenkels des Viergelenkes und der Länge b größer ist als die Summe der Länge d des vom ersten Schwenkarm (22) gebildeten Schenkels des Viergelenkes und der Länge c.

6. Deckenstativ (10) nach Anspruch 5, **dadurch gekennzeichnet, dass** die horizontale Lage des ersten Schwenkarmes (22) zumindest annähernd mit dem Durchschlagspunkt des asymmetrischen Viergelenkes zusammenfällt.

7. Deckenstativ (10) nach Anspruch 6, **dadurch gekennzeichnet, dass** zumindest annähernd gilt:

$$a^2 + b^2 = (c+d)^2$$

8. Deckenstativ (10) nach einem der vorhergehenden Ansprüche, **dadurch gekennzeichnet, dass** die Stellvorrichtung durch einen Linearantrieb gebildet wird, der am Verbindungsgelenk (40) vom ersten Schwenkarm (22) und dem unteren Gelenkschenkel (36) einerseits und am oberen Gelenkschenkel (34) andererseits angreift.

9. Deckenstativ (10) nach einem der vorhergehenden Ansprüche, **dadurch gekennzeichnet, dass** am freien Ende des ersten Schwenkarmes (22) ein Lastenträger (26) angeordnet ist.

10. Deckenstativ (10) nach Anspruch 9, **dadurch gekennzeichnet, dass** der Lastenträger (26) zur Befestigung am freien Ende des ersten Schwenkarmes einen Befestigungsabschnitt (54) hat, an dessen Unterseite ein zur Halterung der Last bestimmter Rahmen (56) um eine vertikale Lastenträgerachse (60) drehbar gelagert ist.

11. Deckenstativ (10) nach Anspruch 9 oder 10, **dadurch gekennzeichnet, dass** zur Geradführung des Lastenträgers ein oberes Gelenkparallelogramm und ein mit dem oberen Gelenkparallelogramm gekoppeltes unteres Gelenkparallelogramm ausgebildet sind,
wobei ein Schenkel des oberen Gelenkparallelogramms durch den oberen Gelenkschenkel (34) des asymmetrischen Viergelenkes gebildet wird und ein weiterer Schenkel des oberen Gelenkparallelogramms mit der ersten vertikalen Achse (24) einen festen Winkel bildet,
wobei das untere Gelenkparallelogramm den ersten Schwenkarm (22) als Schenkel beinhaltet und
wobei die beiden Gelenkparallelogramme dadurch miteinander gekoppelt sind, dass der dem genannten weiteren Schenkel gegenüberliegende Schenkel des oberen Gelenkparallelogramms in einer festen räumlichen Beziehung zu einem Schenkel des unteren Gelenkparallelogramms steht.

12. Deckenstativ (10) nach Anspruch 11, **dadurch gekennzeichnet, dass** der genannte weitere Schenkel des oberen Gelenkparallelogramms durch den Zapfen (28) gebildet wird und dass die in einer festen räumlichen Beziehung zueinander stehenden Schenkel des oberen und unteren Gelenkparallelogramms durch einen gemeinsamen Lenker (52) gebildet werden.

13. Deckenstativ (10) nach einem der vorhergehenden Ansprüche, **dadurch gekennzeichnet, dass** es einen zweiten Schwenkarm (18) beinhaltet, der an einem ersten Ende um eine zweite vertikale Achse (20) schwenkbar gelagert ist und an dessen zweitem Ende der vertikale Zapfen (28) angeordnet ist.

14. Deckenstativ (10) nach einem der vorhergehenden Ansprüche, **dadurch gekennzeichnet, dass** das erste Ende des zweiten Schwenkarmes (18) bzw. in einer Ausführungsform ohne zweiten Schwenkarm der vertikale Zapfen (28) in einer Haltevorrichtung (16) gelagert ist, die ihrerseits in einer Führung (84), die zur Befestigung an einer Zimmerdecke bestimmt ist, horizontal verstellbar gelagert ist.

**15.** Deckenstativ (10) nach einem der vorhergehenden Ansprüche, **dadurch gekennzeichnet, dass** elektrische und/oder Fluidleitungen (66) in außen an den Schwenkarmen (18, 22) entlanggeführten Gliederketten (68, 74, 78, 80) untergebracht sind.

**16.** Deckenstativ (10) nach Ansprüchen 13 und 15, **gekennzeichnet durch** eine erste Gliederkette (68) mit einem festen Abschnitt (70), der am zweiten Schwenkarm (18) entlanggeführt und an diesem befestigt ist und an dessen dem ersten Ende des zweiten Schwenkarmes (18) zugewandten Ende ein Anschlussabschnitt (72) anschließt.

**17.** Deckenstativ (10) nach Anspruch 13 und einem der Ansprüche 15 oder 16, **gekennzeichnet durch** eine mit einem Ende am zweiten Schwenkarm (18) befestigte zweite Gliederkette (74), die in einer horizontalen Schleife um die erste vertikale Achse (24) gelegt ist und deren anderes Ende an einer um die erste vertikale Achse (24) drehbaren, mit dem asymmetrischen Viergelenk rotationsfest verbundenen Scheibe (48) befestigt ist.

**18.** Deckenstativ (10) nach Anspruch 17, **gekennzeichnet durch** eine dritte Gliederkette (78), deren eines Ende an der Scheibe (48) und deren anderes Ende am ersten Schwenkarm (22) befestigt ist.

**19.** Deckenstativ (10) nach Anspruch 10 und einem der Ansprüche 15 bis 18, **gekennzeichnet durch** eine vierte Gliederkette (80), deren eines Ende am ersten Schwenkarm (22) und deren anderes Ende am Befestigungsabschnitt (54) des Lastenträgers (26) befestigt ist.

**20.** Deckenstativ (10) nach Anspruch 10 und einem der vorhergehenden Ansprüche, **dadurch gekennzeichnet, dass** elektrische und/oder Fluidleitungen (66) durch den Befestigungsabschnitt (54) entlang der Lastenträgerachse (60) in dem Lagerungspunkt entgegengesetzter Richtung und anschließend durch einen am Lastenträgerrahmen (56) befestigten Leitungskanal (82) radial nach außen und zum Rahmen (56) geführt werden.

**Claims**

**1.** Ceiling mount (10) with a first pivot arm (22) which can be pivoted about a first vertical axis (24) which is formed on a free end for holding a load, **characterised in that** a load-remote section of the first pivot arm (22) forms a limb of an asymmetrical four joint element, of which the limb lying opposite the first pivot arm (22) is formed by a vertical neck element (28) arranged coaxially with the first vertical axis, on which neck element (28) an upper and a lower articulated limb (34, 36) are mounted axially spaced apart from each other which can be pivoted on the one hand about the neck element axis and on the other hand about two parallel horizontal axes, said articulated limbs (34, 36) being connected at their end remote from the neck element to the first pivot arm (22) so as to be pivotable about horizontal axes,
and **in that** two limbs (34, 36) of the asymmetrical four joint element can be displaced relative to each other by means of an actuator.

**2.** Ceiling mount (10) according to claim 1, **characterised in that** the length b of the upper articulated limb (34) is greater than the length c of the lower articulated limb (36) and **in that** the load-remote section of the first pivot arm (22) and its load-side end lie on opposite sides of the first vertical axis (24).

**3.** Ceiling mount (10) according to claim 2, **characterised in that** the length c is greater than the length a of the limb of the four joint element formed by the neck element (28).

**4.** Ceiling mount (10) according to claim 2 or 3, **characterised in that** the length a of the limb of the four joint element formed by the neck element (28) is greater than the length d of the limb of the four joint element formed by the first pivot arm (22).

**5.** Ceiling mount (10) according to one of the claims 2 to 4, **characterised in that** the sum of the length a of the limb of the four joint element formed by the neck element (28) and the length b is greater than the sum of the length d of the limb of the four joint element formed by the first pivot arm (22) and the length c.

**6.** Ceiling mount (10) according to claim 5, **characterised in that** the horizontal position of the first pivot arm (22) coincides at least virtually with the penetration point of the asymmetrical four joint element.

**7.** Ceiling mount (10) according to claim 6, **characterised in that** the following applies at least virtually:

$$a^2 + b^2 = (c + d)^2$$

8. Ceiling mount (10) according to one of the preceding claims, **characterised in that** the actuator is implemented by a linear drive which engages on the connecting joint (40) of the first pivot arm (22) and the lower articulated limb (36) on the one hand and on the upper articulated limb (34) on the other hand.

9. Ceiling mount (10) according to one of the preceding claims, **characterised in that** a load carrier (26) is arranged on the free end of the first pivot arm (22).

10. Ceiling mount (10) according to claim 9, **characterised in that** the load carrier (26) has a fixing section (54) for fixing to the free end of the first pivot arm, on the lower side of which fixing section (54) a frame (56) intended for holding the load is mounted so as to be rotatable about a vertical load carrier axis (60).

11. Ceiling mount (10) according to claim 9 or 10, **characterised in that** in order to guide the load carrier in a straight line an upper articulated parallelogram and a lower articulated parallelogram coupled to the upper articulated parallelogram are formed,
wherein a limb of the upper articulated parallelogram is formed by the upper articulated limb (34) of the asymmetrical four joint element and a further limb of the upper articulated parallelogram forms a fixed angle with the first vertical axis (24),
wherein the lower articulated parallelogram contains the first pivot arm (22) as a limb and
wherein the two articulated parallelograms are coupled to each other **in that** the limb of the upper articulated parallelogram lying opposite said further limb is in a fixed spatial relationship to a limb of the lower articulated parallelogram.

12. Ceiling mount (10) according to claim 11, **characterised in that** said further limb of the upper articulated parallelogram is formed by the neck element (28) and **in that** the limbs of the upper and lower articulated parallelogram in a fixed spatial relationship to each other are formed by a common connecting rod (52).

13. Ceiling mount (10) according to one of the preceding claims, **characterised in that** it contains a second pivot arm (18) which is mounted on a first end so as to be pivotable about a second vertical axis (20) and the vertical neck element (28) is arranged on the second end thereof.

14. Ceiling mount (10) according to one of the preceding claims, **characterised in that** the first end of the second pivot arm (18) or, in an embodiment without a second pivot arm, the vertical neck element (28) is mounted in a holding device (16) which is for its part mounted so as to be horizontally displaceable in a guide (84) which is intended for fixing to a ceiling of a room.

15. Ceiling mount (10) according to one of the preceding claims, **characterised in that** electric and / or fluid lines (66) are housed in link chains (68, 74, 78, 80) guided along externally on the pivot arms (18, 22).

16. Ceiling mount (10) according to claims 13 and 15, **characterised by** a first link chain (68) with a fixed section (70) which is guided along on the second pivot arm (18) and fixed thereto and connects to its end facing the first end of the second pivot arm (18) a connecting section (72).

17. Ceiling mount (10) according to claim 13 and one of the claims 15 or 16, **characterised by** a second link chain (74) fixed with one end to the second pivot arm (18), wherein the link chain (74) is arranged in a horizontal loop around the first vertical axis (24) and the other end of which is fixed to a disc (48) connected in a rotationally secure way to the asymmetrical four joint element and rotatable about the first vertical axis (24).

18. Ceiling mount (10) according to claim 17, **characterised by** a third link chain (78), one end of which is fixed to the disc (48) and the other end of which is fixed to the first pivot arm (22).

19. Ceiling mount (10) according to claim 10 and one of the claims 15 to 18, **characterised by** a fourth link chain (80), one end of which is fixed to the first pivot arm (22) and the other end of which is fixed to the fixing section (54) of the load carrier (26).

**20.** Ceiling mount (10) according to claim 10 and one of the preceding claims, **characterised in that** electric and / or fluid lines (66) are guided through the fixing section (54) along the load carrier axis (60) in a direction opposing the bearing point and subsequently through a duct (82) fixed to the load carrier frame (56) radially outwards and to the frame (56).

**Revendications**

**1.** Support fixé au plafond (10), comportant un premier bras pivotant (22) qui est apte à pivoter autour d'un premier axe vertical (24) et qui est conformé à une extrémité libre pour supporter une charge, **caractérisé en ce qu'**une portion, distante de la charge, du premier bras pivotant (22) forme une branche d'un quadrilatère articulé asymétrique, dont la branche qui est opposée au premier bras pivotant (22) est formée par un pivot vertical (28) qui est placé coaxialement au premier axe vertical et sur lequel des branches supérieure et inférieure (34, 36) du quadrilatère articulé, qui sont reliées à leur extrémité distante du pivot au premier bras pivotant (22) de façon à pouvoir pivoter autour d'axes horizontaux, sont montées de façon à pouvoir pivoter d'une part autour de l'axe du pivot et d'autre part autour de deux axes horizontaux parallèles, et **en ce que** deux branches (34, 36) du quadrilatère articulé asymétrique sont réglables l'une par rapport à l'autre au moyen d'un dispositif de réglage.

**2.** Support fixé au plafond (10) selon la revendication. 1, **caractérisé en ce que** la longueur b de la branche supérieure (34) du quadrilatère articulé est supérieure à la longueur c de la branche inférieure (36) du quadrilatère articulé, et **en ce que** la portion, distante de la charge, du premier bras pivotant (22) et son extrémité côté charge sont situées sur des côtés opposés du premier axe vertical (24).

**3.** Support fixé au plafond (10) selon la revendication 2, **caractérisé en ce que** la longueur c est supérieure à la longueur a de la branche du quadrilatère articulé qui est formée par le pivot (28).

**4.** Support fixé au plafond (10) selon la revendication 2 ou 3, **caractérisé en ce que** la longueur a de la branche du quadrilatère articulé qui est formée par le pivot (28) est supérieure à la longueur d de la branche du quadrilatère articulé qui est formée par le premier bras pivotant (22).

**5.** Support fixé au plafond (10) selon l'une des revendications 2 à 4, **caractérisé en ce que** la somme de la longueur a de la branche du quadrilatère articulé qui est formée par le pivot (28) et de la longueur b est supérieure à la somme de la longueur d de la branche du quadrilatère articulé qui est formée par le premier bras pivotant (22) et de la longueur c.

**6.** Support fixé au plafond (10) selon la revendication 5, **caractérisé en ce que** la position horizontale du premier bras pivotant (22) coïncide au moins approximativement avec le point d'oscillation du quadrilatère articulé asymétrique.

**7.** Support fixé au plafond (10) selon la revendication 6, **caractérisé en ce que** l'on a sensiblement la relation :

$$a^2 + b^2 = (c + d)^2$$

**8.** Support fixé au plafond (10) selon l'une des revendications précédentes, **caractérisé en ce que** le dispositif de réglage est formé par un actionneur linéaire qui est raccordé d'une part à la liaison articulée (40) par le premier bras pivotant (22) et par la branche inférieure (36) du quadrilatère articulé, et d'autre part à la branche supérieure (34) du quadrilatère articulé.

**9.** Support fixé au plafond (10) selon l'une des revendications précédentes, **caractérisé en ce qu'**un support de charge (26) est agencé à l'extrémité libre du premier bras pivotant (22).

**10.** Support fixé au plafond (10) selon la revendication 9, **caractérisé en ce que** le support de charge (26) comporte une portion de fixation (54) qui est destinée à être fixée à l'extrémité libre du premier bras pivotant, un châssis (56) destiné à supporter la charge étant monté du côté inférieur de la portion de fixation (54) de façon à pouvoir tourner autour d'un axe vertical (60) du support de charge.

**11.** Support fixé au plafond (10) selon la revendication 9 ou 10, **caractérisé en ce qu'**un parallélogramme articulé supérieur et un parallélogramme articulé inférieur, couplé au parallélogramme articulé supérieur, sont conformés de façon à effectuer un guidage rectiligne du support de charge,
une branche du parallélogramme articulé supérieur étant formée par la branche supérieure (34) du quadrilatère articulé asymétrique, et une autre branche du parallélogramme articulé supérieur formant avec le premier axe vertical (24) un angle fixe,
le parallélogramme articulé inférieur comportant comme branche le premier bras pivotant (22), et
les deux parallélogrammes articulés étant couplés l'un à l'autre de telle sorte que la branche du parallélogramme articulé supérieur qui est opposée à ladite autre branche est dans une relation spatiale fixe par rapport à une branche du parallélogramme articulé inférieur.

**12.** Support fixé au plafond (10) selon la revendication 11, **caractérisé en ce que** ladite autre branche du parallélogramme articulé supérieur est formée par le pivot (28), et **en ce que** les branches, disposées l'une par rapport à l'autre dans une relation spatiale fixe, du parallélogramme supérieur et du parallélogramme inférieur, sont formées par un bras commun (52).

**13.** Support fixé au plafond (10) selon l'une des revendications précédentes, **caractérisé en ce qu'**il comporte un deuxième bras pivotant (18) qui est monté à une première extrémité libre de façon à pouvoir pivoter autour d'un deuxième axe vertical (20), et à la deuxième extrémité duquel se trouve le pivot vertical (28).

**14.** Support fixé au plafond (10) selon l'une des revendications précédentes, **caractérisé en ce que** le pivot vertical (28) est monté à la première extrémité du deuxième bras pivotant (18) respectivement, dans un mode de réalisation sans deuxième bras pivotant, dans un dispositif de retenue (16) qui est monté de son côté de façon réglable horizontalement dans une glissière (84) qui est destinée à être fixée au plafond d'une pièce.

**15.** Support fixé au plafond (10) selon l'une des revendications précédentes, **caractérisé en ce que** des lignes électriques et/ou des conduites de fluide (66) sont montées dans des chaînes à maillons (68, 74, 78, 80) guidées à l'extérieur sur les bras pivotants (18, 22).

**16.** Support fixé au plafond (10) selon les revendications 13 et 15, **caractérisé par** une première chaîne à maillons (68), comportant une portion fixe (70) qui est guidée sur le deuxième bras pivotant (18) auquel elle est fixée, et dont l'extrémité, qui est dirigée vers la première extrémité du deuxième bras pivotant (18), est raccordée à une portion de raccordement (72).

**17.** Support fixé au plafond (10) selon la revendication 13 et l'une des revendications 15 ou 16, **caractérisé par** une deuxième chaîne à maillons (74), qui est fixée par une extrémité au deuxième bras pivotant (18), qui est placée suivant une boucle horizontale autour du premier axe vertical (24) et dont l'autre extrémité est fixée à un disque (48) qui est relié fixe en rotation au quadrilatère articulé asymétrique et qui est apte à tourner autour du premier axe vertical (24).

**18.** Support fixé au plafond (10) selon la revendication 17, **caractérisé par** une troisième chaîne à maillons (78), dont une extrémité est fixée au disque (48) et dont l'autre extrémité est fixée au premier bras pivotant (22).

**19.** Support fixé au plafond (10) selon la revendication 10 et l'une des revendications 15 à 18, **caractérisé par** une quatrième chaîne à maillons (80), dont une extrémité est fixée au premier bras pivotant (22) et dont l'autre extrémité est fixée à la portion de fixation (54) du support de charge (26).

**20.** Support fixé au plafond (10) selon la revendication 10 et l'une des revendications précédentes, **caractérisé en ce que** des lignes électriques et/ou des conduites de fluide (66) sont guidées radialement vers l'extérieur et en direction du châssis (56), à travers la portion de suspension (54), le long de l'axe de support de charge (60), dans le sens opposé au point de support, puis à travers un canal de lignes/conduites (82) fixée au châssis de support de charge (56).

Fig. 1

Fig.2

Fig. 3

EP 1 389 706 B1

Fig. 4

Fig. 5

EP 1 389 706 B1

Fig. 6

EP 1 389 706 B1

Fig. 7

EP 1 389 706 B1

Fig. 8

Fig. 9